Europäisches Patentamt

European Patent Office

Office européen des brevets

Veröffentlichungsnummer: **0 291 672**
**A2**

## EUROPÄISCHE PATENTANMELDUNG

Anmeldenummer: 88105142.9

Anmeldetag: 30.03.88

Int. Cl.⁴ **C04B 18/12**

Priorität: 22.05.87 DE 3717240

Veröffentlichungstag der Anmeldung:
**23.11.88 Patentblatt 88/47**

Benannte Vertragsstaaten:
**BE DE FR GB**

Anmelder: **DPU DEUTSCHE PROJEKT UNION GMBH**
**Huyssenallee 58 - 64**
**D-4300 Essen 1(DE)**

Erfinder: **Schick, Gilbert Dietrich, Dipl.-Ing.**
**Am Sichelscheid 7**
**D-5120 Herzogenrath(DE)**
Erfinder: **Ludwig U., Prof.-Dr.-Ing.**
**Düserhofstrasse 48**
**D-5100 Aachen(DE)**

Vertreter: **von Rohr, Hans Wilhelm, Dipl.-Phys. et al**
**Patentanwälte Gesthuysen & von Rohr**
**Huyssenallee 15 Postfach 10 13 33**
**D-4300 Essen 1(DE)**

Verfahren zur Aufbereitung von Steinkohlen-Bergematerial.

Bei einem Verfahren zur Aufbereitung von Steinkohlen-Bergematerial, insbesondere von Steinkohlen-Waschbergen, bei dem das Bergematerial in verschiedene Kornklassen fraktioniert, das Bergematerial in einem bestimmten Kornklassenbereich separiert und das separierte Bergematerial in einem Temperofen getempert wird, gelingt eine Aufbereitung des Steinkohlen-Bergematerials in wirtschaftlicher Weise zu einem harten bzw. aushärtbaren Material mit allgemein bautechnisch vorteilhaften Eigenschaften, insbesondere mit hoher Druckfestigkeit und/oder mit hoher Biegezugfestigkeit dadurch, daß das Bergematerial nach der Fraktionierung, aber vor der Separierung durch eine flächige Pressung zerkleinert wird und daß die Temperung des separierten Bergematerials in einem Temperaturbereich von 750 K bis 1.100 K, insbesondere von ca. 800 K bis ca. 1.000 K, erfolgt. Das so entstehende Material hat überraschenderweise im Ergebnis puzzolanische Eigenschaften und dadurch eine hohe einachsige Druckfestigkeit und entsprechende Biegezugfestigkeit.

EP 0 291 672 A2

## "Verfahren zur Aufbereitung von Steinkohlen-Bergematerial"

Die Erfindung betrifft ein Verfahren zur Aufbereitung von Steinkohlen-Bergematerial, insbesondere von Steinkohlen-Waschbergen, bei dem das Bergematerial in verschiedene Kornklassen fraktioniert, das Bergematerial in einem bestimmten Kornklassenbereich separiert und das separierte Bergematerial in einem Temperofen getempert wird. Anschließend befaßt sich die Erfindung weiter mit Verfahren, die verschiedene vorteilhafte Verwendungen des Verfahrenserzeugnisses zum Gegenstand haben.

Seit über zehn Jahren ist man im Steinkohlenbergbau intensiv damit befaßt, nach wirtschaftlich nutzbringenden Verwertungsmöglichkeiten für Steinkohlen-Bergematerial, insbesondere für Steinkohlen-Waschberge zu suchen. Berücksichtigt man, daß Steinkohlen-Bergematerial derzeit pro Jahr im Umfang von ca. 70 Millionen Tonnen anfällt, so werden Kosten und Größe der damit verbundenen Deponieprobleme deutlich.

Bergematerial fällt bei der Förderung und Aufbereitung von Kohle an, wobei man zwischen Grubenbergen, die bei der Erschließung der Flöze anfallen, und in den Aufbereitungsanlagen zur Gewinnung der Rohwaschkohle anfallenden Waschbergen unterscheidet. Letztere bilden den überwiegenden Anteil von über 90 % des anfallenden Bergematerials, so daß nachfolgend die vorliegende Erfindung in erster Linie anhand von Waschbergen erläutert wird.

In den Aufbereitungsanlagen fallen die Waschberge in unterschiedlicher Körnung an und werden dabei in Grobwaschberge mit einer Korngröße von mehr als 10 mm bei ca. 5 % Wassergehalt, Feinwaschberge mit Korngrößen zwischen 10 mm und 0,75 mm bei ca. 10 bis 12 % Wassergehalt und Feinstwaschberge mit Korngrößen unter 0,75 mm bei 25 bis 30 % Wassergehalt unterteilt. In den Waschbergefraktionen sind körnungsabhängig noch Restkohlebestandteile enthalten. Die Restheizenergie, die sich in den Waschbergen findet, liegt zwischen ca. 2.000 kJ/kg bei den Grobwaschbergen und ca. 6.000 kJ/kg bei den Feinstwaschbergen (vgl. R. Petry "Methode zur technisch-wirtschaftlichen Beurteilung der Bergeverwertung im Untertagebetrieb des Steinkohlenbergbaus", Dissertation, TU Berlin, 1981, DE-OS 33 10 495).

Von den jährlich anfallenden Waschbergemengen werden ca. 20 % für Verfüllungen (Bergabsenkungen, Kiesgruben, Sandgruben, Steinbrüche), als Schüttgut im Straßen-, Damm- oder Deichbau und für Aufschüttungen in der Landschaftsgestaltung verwendet. Hier ist aber die unstabile stoffliche Zusammensetzung nicht aufbereiteter Waschberge ein gewisses Problem, das eine weitere Verwendung behindert. Die Haldendeponie von Waschbergen ist schon heute schwierig und wird in der Zukunft aus Umweltschutzgesichtspunkten und Landschaftsgesichtspunkten immer schwieriger werden. Eine untertägige Deponie von Waschbergen im an sich bekannten Versatzbau ist relativ kostenaufwendig und deshalb in der Vergangenheit in abnehmendem Maße praktiziert worden, da die nach den bekannten Verfahren aufbereiteten Waschberge nur unzureichende hydraulische Eigenschaften aufwiesen und daher übertägige und untertägige Bergschäden nicht wirksam verhindern konnten.

Mit dem Ziel, Waschberge zu dichtgebranntem, festem Material für verschiedene Anwendungen zu keramisieren, ist es bekannt, Waschberge bei Temperaturen um 1.100 K und darüber zu tempern (E. Hoffmann "Zur verfahrenstechnischen Aufbereitung von Steinkohlenwaschbergen zur Straßenbaustoffen", Dissertation, Universität Hannover, 1984; DE-OS 33 13 727, DE-OS 33 10 495). Diese Versuche haben zu keiner wirtschaftlichen Aufbereitung von Steinkohlen-Bergematerial geführt, da im Kornklassenbereich von 40 bis 10 mm die thermische Umwandlung nicht selbst abläuft, sondern zusätzlicher erheblicher Energiezufuhr bedarf, wohingegen bei Hereinnahme einer darunterliegenden Fraktion, beispielsweise bis 8 mm, zwar erheblich höhere Restenergieanteile vorhanden waren, so daß eine selbständige thermische Umwandlung erfolgte, jedoch wegen der ungleichen Verteilung der Restkohle in Nestern die Temperaturen auf 1.250 K und höher stiegen, so daß es dort zu Sinterprozessen kam. Dies erkennend ist dort als Lösung vorgeschlagen worden, mit zwei selbständig arbeitenden Reaktoreinheiten zu arbeiten, nämlich den brennstofffreien Kornklassenbereich von 10 mm bis 0,5 mm in einem Wirbelschichtofen zu behandeln und die dabei entstehenden Heißgase zur Temperung des Kornklassenbereichs von 40 mm bis 10 mm in einem nachgeschalteten Drehofen zu nutzen. Das ist kostenmäßig derart herausragend, daß von einer wirtschaftlichen Aufbereitungsmöglichkeit für Steinkohlen-Bergematerial nicht die Rede sein kann.

Ungeachtet der zuvor dargestellten Situation ist die einzige quantitativ wirksame Verwendung von Steinkohlen-Bergematerial als Baustoff zu sehen, ergänzt noch durch allgemeine Anwendungsgebiete auf keramischem Gebiet. Insoweit liegt folglich der Erfindung die Aufgabe zugrunde, ein Verfahren anzugeben, mit dem Steinkohlen-Bergematerial, insbesondere Steinkohlen-Waschberge, in wirtschaftlicher Weise zu einem harten oder aushärtbaren Material mit allgemein bautechnisch vorteilhaften Eigenschaften, insbesondere hoher Druckfestigkeit und oder Biegezugfestigkeit, aufbereitet werden kann.

Die zuvor aufgezeigte Aufgabe ist erfindungsgemäß dadurch gelöst, daß das Bergematerial nach der Fraktionierung, aber vor der Separierung zerkleinert wird und die Zerkleinerung durch eine flächige Pressung, insbesondere durch eine Pressung mit der Hauptpreßkraftkomponente in der Ebene der Sedimentschichten des Bergematerials, erfolgt und daß die Temperung des separierten Bergematerials in einem Temperaturbereich von 750 K bis 1.100 K, insbesondere von 800 K bis ca. 1.000 K, erfolgt.

Erfindungsgemäß ist erkannt worden, daß die Neigung des fraktionierten Bergematerials, in Nestern beim Tempern Temperaturen zu erreichen, die zu einer Sinterung führen, durch die Zerkleinerung vor der Temperung und durch die Einhaltung bestimmter Tempertemperaturen unschädlich gemacht werden kann. Überraschenderweise wird auch mit diesen Temperaturen erreicht, daß derartige Veränderungen in der Struktur der das Bergematerial ausmachenden Mineralstoffe eintreten, daß sich im Ergebnis puzzolanische Eigenschaften ergeben. Unter Puzzolanen versteht man natürlich vorkommende oder künstlich hergestellte silikatische Stoffe, die für sich selbst genommen nicht erhärten, dies aber in Gegenwart von alkalischen Stoffen, insbesondere kalkabspaltenden Bindemitteln tun. Die puzzolanische Reaktion erfolgt regelmäßig in wässrigen Lösungen unter Bildung von Hydratationspunkten. Das Ergebnis sind Materialien mit ausgeprägten hydraulischen Eigenschaften, insbesondere sehr hoher einachsiger Druckfestigkeit und entsprechender Biegezugfestigkeit.

Für die Vermeidung von Temperaturnestern bei der Temperung ist es aber erforderlich, daß die Restkohle aus dem zu tempernden Bergematerial so weit wie möglich entfernt wird. Jedenfalls sollen der Restkohlebestand minimal und die Restkohleverteilung möglichst gleichmäßig sein. Der dazu dienende Verfahrensschritt der Zerkleinerung ist unterschiedlich wirksam, je nachdem wie diese Zerkleinerung erfolgt. Ausgehend von der Erkenntnis, daß im Sedimentgestein Restkohle in Form bestimmter, relativ genau ausgerichteter Schichten vorliegt bzw. in bestimmten Sedimentschichten definiert auftritt, enthält die Lehre der Erfindung als wesentlichen Verfahrensschritt, daß die Zerkleinerung des Bergematerials durch eine flächige Pressung, insbesondere durch eine Pressung mit der Hauptpreßkraftkomponente in der Ebene der Sedimentschichten des Bergematerials erfolgt. Es hat sich gezeigt, daß dabei die Sedimentschichten des Bergematerials blätterartig aufplatzen und so einzelne, die Restkohle enthaltende Sedimentschichten freigelegt werden. Die Restkohle - C-fix Anteile -wird also optimal aufgeschlossen und freigelegt.

Die zuvor angesprochenen, besonders leicht zerkleinerbaren Sedimentschichten, in denen die Restkohle vorliegt oder die ganz aus Restkohle bestehen, führen zum Anfall der Restkohle in den kleinsten Kornklassen. Die Restkohle kann also so ohne weiteres mit hohem Wirkungsgrad aus dem Gesamt-Bergematerial abgetrennt werden. Damit ist einerseits die Restkohle aus dem zu tempernden Material weitgehend entfernt, so daß Temperaturnester nicht auftreten können, steht andererseits die Restkohle separiert als Brennstoff für den Temperprozeß zur Verfügung.

Erfindungsgemäß ist herausgearbeitet worden, daß bei einer Temperung von zuvor in ganz besonderer Weise zerkleinertem Steinkohlen-Bergematerial im zuvor festgehaltenen Temperaturbereich, vorzugsweise im Temperaturbereich unter 1.000 K, ein Material mit bautechnisch hervorragenden Eigenschaften entsteht. Die vorzüglichen puzzolanischen Eigenschaften des erfindungsgemäß hergestellten Materials liegen im Material höchst gleichmäßig vor. Im Ergebnis ist es mit der Erfindung gelungen, ein Verfahren zur Herstellung von aufbereitetem Steinkohlen-Bergematerial anzugeben, mit dem auf wirtschaftlich günstige Weise Material mit sehr gleichmäßigen, bautechnisch vorteilhaften Eigenschaften produzierbar ist.

Es ist selbstverständlich zweckmäßig, die Zerkleinerung kornklassenspezifisch durchzuführen, da übliche Zerkleinerungsanlagen bei einer kornklassenspezifischen Zerkleinerung einen besonders hohen Wirkungsgrad haben.

Für den erfindungsgemäß in ganz besonderer Weise ablaufenden Temperprozeß ist nicht nur die eingehaltene Temperatur von Bedeutung, sondern die Gleichmäßigkeit der Eigenschaften im hergestellten Material ist auch von der Art der Aufheizung bei der Temperung abhängig. Hierzu ist es vorteilhaft, daß bei der Temperung die Aufheizung des Bergematerials mit einer Temperaturanstiegsgeschwindigkeit von 5 bis 100 K/min, vorzugsweise von 20 bis 70 K/min, insbesondere von ca. 50 K/min, erfolgt. Es wird also eine relativ langsame Aufheizung als besonders zweckmäßig angesehen, so daß schon während des Aufheizverfahrens die Gefahr der Bildung von Temperaturnestern verhindert wird, also eine gleichmäßige Temperaturverteilung schon in diesem frühen Stadium des Gesamtverfahrens gewährleistet ist.

Als dritte Komponente für den Temperprozeß spielt die Gesamtdauer der Temperung eine Rolle, wobei hier die Haltezeit nach Erreichung der Solltemperatur gemeint ist. Insoweit empfiehlt es sich, daß die Temperung des Bergematerials über eine Zeit von 20 bis 90 min, insbesondere von 30 bis 60 min. erfolgt.

Der Temperung selbst kann zweckmäßigerweise noch ein Vorwärmschritt vorgeschaltet sein. Insoweit ist es zweckmäßig, daß unmittelbar vor der Temperung eine Vorwärmung, vorzugsweise bei einer Temperatur von 470 K bis 570 K, über eine Zeit von ca. 20 bis 40 min erfolgt.

Generell gilt, daß es zweckmäßig ist, wenn das Bergematerial vor der Fraktionierung vorgetrocknet wird, vorzugsweise bei einer Trocknungstemperatur von 320 bis 570 K, insbesondere von etwa 400 K. Dies ist wegen des in den einzelnen Fraktionen relativ ungleichmäßigen Wassergehalts im unbehandelten Bergematerial, insbesondere in den Steinkohlen-Waschbergen, ein zweckmäßiger Verfahrensschritt. Die Vortrocknung hat auch noch den Effekt, daß die an den Bergematerialstücken haftende, nach dem Austritt aus der Wäsche - schlammartige Staubkohle abfällt und vorab separiert werden kann, um später ggf. als Brennmaterial genutzt zu werden.

Bislang ist nur allgemein davon gesprochen worden, daß das Bergematerial im erfindungsgemäßen Verfahren in einem bestimmten Kornklassenbereich separiert und nur in diesem separierten Kornklassenbereich getempert wird. Dieser Kornklassenbereich kann lediglich eine Obergrenze aufweisen, zweckmäßigerweise und nach bevorzugter Lehre der Erfindung wird er aber in erster Linie eine Untergrenze aufweisen. Im Stand der Technik lag die Untergrenze für eine Verhinderung des Auftretens von Temperaturnestern bei einer Korngröße von 10 mm. Erfindungsgemäß gilt nun nach bevorzugter Lehre, daß die Untergrenze des Separierungsbereichs bei einer Korngröße von ca. 1,0 mm bis 1,5 mm und die Obergrenze bei einer Korngröße von 40 mm bis 100 mm, insbesondere einer Korngröße von etwa 60 mm, liegt. Man kann die Untergrenze für den Kornklassenbereich erfindungsgemäß bis auf die Korngröße von etwa 1,5 mm oder gar bis auf 1,0 mm absenken, da durch die Zerkleinerung des Bergematerials vor der Separierung der Restkohleanteil auch bei Korngrößen unter 10 mm gegenüber dem bekannten Stand der Technik drastisch verringert ist und in erster Linie in der kleinsten Kornklasse anfällt. Dadurch und wegen der geringen Temperatur der Temperung ist die Gefahr von Temperaturnestern im Temperprozeß gebannt. Gleichzeitig wird die Voraussetzung dafür geschaffen, daß die Restkohle in der mit großem Wirkungsgrad erfolgten Separierung dem Temperprozeß als Brennmaterial wieder zugeführt werden kann. Damit stammt die Temperenergie für das erfindungsgemäße Verfahren zum großen Teil vollständig aus dem Bergematerial selbst.

Im einzelnen hat es sich als zweckmäßig erwiesen, daß eine Fraktionierung in den Kornklassen + 50 mm, + 32 mm, + 16 mm, + 8 mm, + 4 mm und + 1,5 mm erfolgt. Durch Absiebung können diese Kornklassen in üblicher Weise festgehalten werden, es werden also die jeweils die Maschenweite für die entsprechende Kornklasse unterschreitenden Korngrößen der jeweils nächsten Stufe zugeführt bzw. schließlich in der letzten Stufe gesammelt. Zweckmäßig ist es dann, wenn man die Zerkleinerung in den abgesiebten Kornklassen separat vornimmt.

Zuvor ist die Frage des Energieverbrauchs des erfindungsgemäßen Verfahrens diskutiert worden. Dieser ist natürlich für die wirtschaftliche Durchführbarkeit des Verfahrens von entscheidender Bedeutung. Erfindungsgemäß wird nun nach ganz bevorzugter Lehre die Kornklasse - 1,5 mm (bis - 1,0 mm) als Brennstoff zur Temperung des separierten Bergematerials dem Temperofen zugeführt. Die erfindungsgemäße Analyse hat gezeigt, daß sich der ganz überwiegende Restenergieanteil in dieser kleinsten Kornklasse im erfindungsgemäßen Verfahren sammelt.

Während der Restkohleanteil im gesamten Bergematerial nicht viel mehr als 8 % beträgt, erreicht er in dieser kleinsten Kornklasse den Wert von 20 % und mehr. Damit ist dieses Material ein energiereicher Brennstoff für einen Staubbrenner in einem Temperofen. Jedenfalls dann, wenn man diese bevorzugte Lehre der Erfindung verwirklicht, kommt man zu einem insgesamt sich selbst erhaltenden Verfahren zur Aufbereitung von Steinkohlen-Bergematerial, das außerordentlich wirtschaftlich zu betreiben ist. Durch gesteuerte Zuführung des in feiner Klassierung vorliegenden Brennstoffs läßt sich die Temperatur des Temperprozesses außerordentlich feinfühlig regeln, was eine wesentliche Voraussetzung für den optimalen Ablauf des erfindungsgemäßen Verfahrens ist.

Unter Umständen kann es zweckmäßig sein, daß das getemperte Bergematerial nach Abkühlung vermahlen, insbesondere auf eine Mahlfeinheit von ca. 5.000 $cm^2 g$ (Blaine) und mehr bzw. von 10 $m^2 g$ (BET) und mehr vermahlen wird. Die Vermahlung des getemperten Bergematerials zu der geforderten Mahlfeinheit führt zu einer erheblichen Erhöhung der reaktiven Oberfläche des Bergematerials, die wiederum für weiter anschließende Verfahrensschritte von Bedeutung sein kann. Häufig wird man, abhängig von dem jeweiligen Einsatzgebiet des hergestellten Materials, nur einen Teil des getemperten Bergematerials diesem Verfahrensschritt unterziehen.

In gleicher Weise häufig nur für einen Teil des getemperten Bergematerials angewandt ist der erfindungsgemäße Verfahrensschritt, daß das getemperte Bergematerial mit kalkabspaltendem Bindemittel, insbesondere Kalkhydrat, Portlandzement, Portlandzementklinker od. dgl., vermahlen oder vermischt wird. Dieser Verfahrensschritt ist besonders dann mit hohem Wirkungsgrad durchführbar, wenn der zuvor erläuterte Verfahrensschritt der Vermahlung durchgeführt wird. Wesentlich ist für diesen Verfahrensschritt, daß hier eine puzzolanische Voraktivierung des getemperten Bergematerials, also dieses künstlichen Puzzolans, mit kalkabspaltendem Bindemittel erfolgt. Noch ist dieses Material reaktionsträge bzw. inert, bei Zugabe von Wasser wird es aber unverzüglich aktiviert. Dabei ist das Material je nach Zusammensetzung in diesem Zustand unter Umständen schon durch in der Luft enthaltene Feuchtigkeit aktivierbar, so daß es in weiterer verfahrenstechnischer Behandlung besonderer Vorsichtsmaßnahmen bedarf.

Entscheidend ist, daß mit dem erfindungsgemäßen Verfahren Steinkohlen-Bergematerial, insbesondere Steinkohlen-Waschbergematerial, in großem Ausmaße wirtschaftlich so aufbereitet werden kann, daß das hergestellte Material bautechnisch vorteilhafte, nämlich puzzolanische Eigenschaften aufweist. Verschiedenen, besonders vorteilhaften Verwendungsgebieten dieses Materials dient nun die nachfolgende Betrachtung.

Ein besonders bevorzugtes Verwendungsgebiet für das puzzolanische Material ist das Verfüllen von Hohlräumen in bergmännischen Gewinnungsbetrieben mit einem Verfüllungsmaterial. Für ein solches Verfahren ist es also zweckmäßig, daß das Verfüllungsmaterial ein nach einem der Ansprüche 1 bis 5 hergestelltes, getempertes Bergematerial ist. Für sich ist ein solches Verfahren aus dem Bereich des Erzbergbaus bekannt (DE-OS 29 39 051), die hier zum Verfüllen verwendeten Waschberge der Eisenerzförderung haben aber keinerlei puzzolanische Eigenschaften. Diese sind diesen Waschbergen auch nicht durch Temperung beizubringen, jedenfalls nicht in wirtschaftlicher Weise. Die Verwendung des erfindungsgemäß hergestellten Materials aus Steinkohlen-Bergematerial hingegen führt in überraschender Weise dazu, daß ein Verfüllungsmaterial mit dichter Gefügestruktur und sehr kurzzeitiger, hoher Verfestigung zur Verfügung steht. Die Verwendung dieses Materials führt denn auch dazu, daß der Versatzbau im untertägigen Steinkohlenbergbau plötzlich wieder eine wirtschaftliche und technische Attraktivität gewinnt. Dies ist die Folge der hohen einachsigen Druckfestigkeit des erfindungsgemäß erzeugten Verfüllungsmaterials, das bei Verwendung dieses Materials die Absenkung durch Versatzbau drastisch reduziert. Damit steht endlich ein Verfüllungsmaterial zur Verfügung, mit dem eine Renaissance des Versatzbaus im Steinkohlenbergbau möglich ist (zur Problematik insgesamt vgl. Hans P.Richter in Erzmetall 39 (1986), Seiten 551 bis 557 und Immo Rohlfing in Erzmetall 39 (1986), Seiten 541 bis 546).

Es versteht sich von selbst, daß das Verfüllungsmaterial in der zuvor erläuterten, erfindungsgemäßen Verwendungsart unverzüglich nach dem Hereingewinnen der Kohle in die ausgekohlten Flözhohlräume eingebracht werden kann, und zwar in den an sich bekannten verschiedenen Techniken mit mehr oder weniger vollständiger Schalung (Knissel, Glückauf 120 (1984), Seiten 1599 bis 1604).

In der hier erläuterten, erfindungsgemäßen Verwendungsart des erfindungsgemäß hergestellten Bergematerials ist eine Direkteinbringung des mit kalkabspaltendem Bindemittel vermengten, getemperten Bergematerials möglich. Dies ist allerdings aus den zuvor erläuterten Gründen wegen der Wasseraufnahme aus der Umgebungsluft - schwierig, evtl. vorhandene Rohrleitungen od. dgl. können leicht verstopfen. Jedenfalls sind kostenaufwendige, zusätzliche Maßnahmen erforderlich. Selbst mit trockener Förderung bis zum Einsatzort, also dem jeweils zu verfüllenden Hohlraum, führt eine abschließende Einsprühung mit Wasser vor Einbringung in den Hohlraum zu einer nur ungleichmäßigen Benetzung und damit zu ungleichmäßig verteilten hydraulischen Eigenschaften. Nach besonderer Lehre der Erfindung gilt daher in diesem Zusammenhang, daß zweckmäßigerweise das Verfüllungsmaterial ohne Beimengung von kalkabspaltendem Bindemittel in einer Suspension an den zu verfüllenden Hohlraum transportiert, insbesondere durch Rohrleitungen geleitet, und erst unmittelbar vor dem Einbringen in den Hohlraum mit dem kalkabspaltenden Bindemittel oder einem das kalkabspaltende Bindemittel enthaltenden Zusatzstoff vermischt wird.

Mit dem zuvor erläuterten Verfahren wird das inerte getemperte Bergematerial bis an den Mischort gefördert und dort erst mit kalkabspaltendem Bindemittel vermischt und dabei gleichzeitig puzzolanisch aktiviert und zur Beteiligung an der Erhärtung des Verfüllungsmaterials insgesamt angeregt. Das Ergebnis ist ein extrem schnell aushärtendes Verfüllungsmaterial mit im Endzustand außerordentlich hoher Druckfestigkeit und Biegefestigkeit. Da das Material zunächst inert ist, kann es ohne weiteres in einer wässrigen Suspension gefördert werden. Besonders empfiehlt es sich, daß die Suspension Wasser und Feinstkornanteile im Überschuß enthält. Hier wird eine weitere vorteilhafte Folge des hohen Feinstkornanteils im erfindungsgemäß klassierten Bergematerial deutlich, nämlich die Suspensionswirkung der Feinstkornanteile.

Hinsichtlich der Eigenschaften der Suspension, die schließlich zum Verfüllungsmaterial führt, empfiehlt es sich, daß diese ein Ausbreitmaß von mehr als 60 cm aufweist. Insoweit handelt es sich also um einen Dünnstrom, bei diesem Verfüllverfahren also um einen Pumpversatz. Demgegenüber empfiehlt es sich, daß das fertige, in den Hohlraum eingebrachte Verfüllungsmaterial ein Ausbreitmaß von weniger als 60 cm aufweist. Letztlich ist dann die Einbringung des fertigen Verfüllmaterials in den Hohlraum also ein Dichtstrom-Festversatz im Sinne der im Stand der Technik verwendeten Bezeichnungsweise.

Der weiter oben erläuterte, dem Verfüllungsmaterial am Mischort zuzugebende Zusatzstoff mit dem kalkabspaltenden Bindemittel kann natürlich grundsätzlich jeder denkbare Zusatzstoff sein. Es kann sich dabei also insbesondere um kalkabspaltende Bindemittel als solche handeln. Nach weiterer Lehre der Erfindung empfiehlt es sich aber insoweit, daß der Zusatzstoff mit kalkabspaltendem Bindemittel versetztes Verfüllungsmaterial nach Anspruch 5 ist. Verfahrenstechnisch wird man also aus dem Verfüllungsmaterial nur einen Teil, und zwar einen relativ kleinen Teil, vorab zu hoher Mahlfeinheit vermahlen und mit kalkabspaltendem Bindemittel versehen. Dieses Verfüllungsmaterial mit kalkabspaltendem Bindemittel wird dann unmittelbar an den Mischort verbracht, insbesondere in Rohrleitungen gefördert, und dort mit dem weiteren, nicht mit kalkabspaltendem Bindemittel versehenen Bergematerial vermischt.

Auch für den Zusatzstoff gilt, daß es sich hier um eine Suspension in Wasser handeln kann, wenn man mit kontinuierlicher Fördergeschwindigkeit fördert, um Abbindungen zu vermeiden.

Besonders zweckmäßig ist es, wenn der Zusatzstoff in Rohrleitungen pneumatisch gefördert wird. Das gilt insbesondere dann, wenn der Zusatzstoff einen hohen Freikalkanteil hat.

Im zuvor erläuterten Zusammenhang kommt besondere Bedeutung der Maßnahme zu, daß der Anteil an kalkabspaltendem Bindemittel vor dem Transport durch Mischung mit bindemittelfreiem Verfüllungsmaterial auf unter etwa 1,5 % (Masse) gebracht wird. Bei höherem Anteil an kalkabspaltendem Bindemittel ist jedenfalls eine pneumatische Förderung vorzuziehen.

Schließlich gilt noch, daß der Zusatzstoff auch ein Fließmittel enthalten kann, um in besonderem Maße sicherzustellen, daß das Verfüllungsmaterial alle Ausformungen des auszufüllenden Hohlraums wirklich erreicht. Hierfür gibt es z. B. modifizierte Melaminharze (Melment).

Die erfindungsgemäße Verwendung des erfindungsgemäß hergestellten Materials aus getempertem Bergematerial bei der Ausfüllung von Hohlräumen in bergmännischen Gewinnungsbetrieben führt dazu, daß in diesen Hohlräumen die immer virulente Maximalforderung, Druckfestigkeiten zu erreichen, die der Druckfestigkeit des unzerstörten Gebirges entsprechen, fast erreicht wird. Das hydraulisch abbindende Verfüllungsmaterial, das erfindungsgemäß hier verwendet wird, füllt den Hohlraum vollständig aus und setzt dem Gebirgsdruck einen unverzüglich einsetzenden und dauerhaften Widerstand entgegen. Damit läßt sich das Auftreten von inneren und äußeren Bergschäden weitestgehend vermeiden.

Die im zuvor erläuterten Verwendungsfall erzielte Materialstruktur im Hohlraum ist durch ein sehr festes, kaum aufbrechbares Gefüge gekennzeichnet. Dies hat zur Folge, daß wegen der hohen Verdichtung und Verfestigung keine umweltschädigendem Auslaugungen auftreten. Es hat sich gezeigt, daß man in geringem Anteil dem Verfüllungsmaterial industrielle Rückstands-und Schadstoffe beimischen kann, jedenfalls dann, wenn diese zur Inertisierung und Mineralisierung vorbehandelt worden sind. Damit lassen sich Hohlräume in bergmännischen Gewinnungsbetrieben erfindungsgemäß in die Umwelt nicht gefährdender Weise als Schadstoffdeponien nutzen.

Verfahrenstechnisch gilt in diesem Zusammenhang, daß es zweckmäßig ist, wenn die industriellen Rückstands- und Schadstoffe separat, vorzugsweise in einer eigenen Rohrleitung, in die Nähe des zu verfüllenden Hohlraums, also an den Mischort, transportiert und dort kontinuierlich oder diskontinuierlich dem Verfüllungsmaterial beigemischt werden.

Weitere erfindungsgemäße Verwendungsgebiete für das erfindungsgemäß hergestellte getemperte Bergematerial sind die Herstellung von Zement, Mörtel oder Beton, wobei das erfindungsgemäß hergestellte, getemperte Bergematerial einerseits als Zusatzstoff, andererseits als Zuschlagstoff verwendet werden kann. Das gilt jedenfalls für bestimmte, auszuwählende Kornklassenbereiche, als Zusatzstoff eher die kleineren Korngrößen, als Zuschlagstoff eher die größeren Korngrößen. Die puzzolanischen Eigenschaften des erfindungsgemäß hergestellten Materials lassen sich so für Baumaßnahmen über und unter Tage in vollem Umfange vorteilhaft nutzen. Daß dabei Verfahrenstechniken der zuvor erläuterten Art aus dem Versatzbau Anwendung finden können, liegt auf der Hand.

Das erfindungsgemäß hergestellte, getemperte Bergematerial läßt sich weiter verwenden als Füllmasse für eine allseitige Abdichtung von Deponien, zum Verfüllen und Abdichten von Spalten, Klüften und Hohlräumen, zum Verfestigen und Abdichten von Schichten im Erdreich durch Mantelbildung oder Injektion usw..

## Ansprüche

1. Verfahren zur Aufbereitung von Steinkohlen-Bergematerial, insbesondere von Steinkohlen-Waschbergen, bei dem das Bergematerial in verschiedene Kornklassen fraktioniert, das Bergematerial in einem bestimmten Kornklassenbereich separiert und das separierte Bergematerial in einem Temperofen getempert wird, **dadurch gekennzeichnet,** daß das Bergematerial nach der Fraktionierung, aber vor der Separierung zerkleinert, insbesondere kornklassenspezifisch zerkleinert wird und die Zerkleinerung durch eine flächige Pressung, insbesondere durch eine Pressung mit der Hauptpreßkraftkomponente in der Ebene der Sedimentschichten des Bergematerials, erfolgt und daß die Temperung des separierten Bergematerials in einem Temperaturbereich von 750 K bis 1.100 K, insbesondere von ca. 800 K bis ca. 1.000 K, erfolgt.

2. Verfahren nach Anspruch 1, dadurch gekennzeichnet, daß bei der Temperung die Aufheizung des Bergematerials mit einer Temperaturanstiegsgeschwindigkeit von 5 bis 100 K min, vorzugsweise von 20 bis 70 K min, insbesondere von ca. 50 K min, erfolgt und oder daß die Temperung des Bergematerials über eine Zeit von 20 bis 90 min, insbesondere von 30 bis 60 min, erfolgt und oder daß unmittelbar vor der Temperung eine Vorwärmung, vorzugsweise bei einer Temperatur von 470 K bis 570 K, über eine Zeit von ca. 20 bis 40 min erfolgt.

3. Verfahren nach Anspruch 1 oder 2, dadurch gekennzeichnet, daß das Bergematerial vor der Fraktionierung vorgetrocknet wird, vorzugsweise bei einer Trocknungstemperatur von 320 K bis 570 K, insbesondere von etwa 400 K.

4. Verfahren nach einem der Ansprüche 1 bis 3, dadurch gekennzeichnet, daß die Untergrenze des Separierungsbereichs bei einer Korngröße von ca. 1,0 mm bis 1,5 mm und die Obergrenze bei einer Korngröße von 40 bis 100 mm, insbesondere einer Korngröße von etwa 60 mm, liegt, daß, vorzugsweise, eine Fraktionierung in den Kornklassen + 50 mm, + 32 mm, + 16 mm, + 8 mm, + 4 mm und + 1,5 mm erfolgt und daß, vorzugsweise, die Kornklasse - 1,5 mm (bis - 1,0 mm) als Brennstoff zur Temperung des separierten Bergematerials dem Temperofen zugeführt wird.

5. Verfahren nach einem der Ansprüche 1 bis 4, dadurch gekennzeichnet, daß das getemperte Bergematerial nach Abkühlung vermahlen, insbesondere auf eine Mahlfeinheit von c. 5.000 cm²/g (Blaine) und mehr bzw. mehr als 10 m²/g (BET) vermahlen wird und/oder mit kalkabspaltendem Bindemittel, insbesondere Kalkhydrat, Portlandzemente, Portlandzementklinker od. dgl., vermahlen oder vermischt wird.

6. Verfahren zu Verfüllen von Hohlräumen in bergmännischen Gewinnungsbetrieben mit einem Verfüllungsmaterial, **dadurch gekennzeichnet,** daß das Verfüllungsmaterial ein nach einem der Ansprüche 1 bis 5 hergestelltes, getempertes Bergematerial ist, daß, vorzugsweise, das Verfüllungsmaterial ohne Beimengung von kalkabspaltendem Bindemittel in einer Suspension an den zu verfüllenden Hohlraum transportiert, insbesondere durch Rohrleitungen geleitet, und erst unmittelbar vor dem Einbringen in den Hohlraum mit dem kalkabspaltenden Bindemittel oder einem das kalkabspaltende Bindemittel enthaltenden Zusatzstoff vermischt wird und daß, vorzugsweise, das fertige, in den Hohlraum eingebrachte Verfüllungsmaterial ein Ausbreitmaß von weniger als 60 cm aufweist.

7. Verfahren nach Anspruch 6, dadurch gekennzeichnet, daß die Suspension Wasser und Feinstkornanteile im Überschuß enthält und oder ein Ausbreitmaß von mehr als 60 cm aufweist.

8. Verfahren nach Anspruch 6, dadurch gekennzeichnet, daß der Zusatzstoff mit kalkabspaltendem Bindemitel versetzes Verfüllungsmaterial nach Anspruch 5 ist und/oder daß der Zusatzstoff in Form einer Suspension, vor zugsweise einer Suspension in Wasser, transportiert oder in Rohrleitungen pneumatisch gefördert wird.

9. Verfahren nach einem der Ansprüche 6 bis 8, dadurch gekennzeichnet, daß der Anteil an kalkabspaltendem Bindemittel vor dem Transport durch Mischung mit bindemittelfreiem Verfüllungsmaterial auf etwa 1,5 % (Masse) gebracht wird.

10. Verfahren nach einem der Ansprüche 6 bis 9, dadurch gekennzeichnet, daß dem Verfüllungsmaterial vor dem Einbringen in den Hohlraum ggf. vorbehandelte industrielle Rückstands- und Schadstoffe beigemischt werden und daß, vorzugsweise, die industriellen Rückstands- und Schadstoffe separat, vorzugsweise in einer eigenen Rohrleitung, in die Nähe des zu verfüllenden Hohlraums, also an den Mischort, transportiert und dort kontinuierlich oder diskontinuierlich dem Verfüllungsmaterial beigemischt werden.

11. Verfahren zur Herstellung von Zement, Mörtel oder Beton, **dadurch gekennzeichnet,** daß als Zusatzstoff ein nach einem der Ansprüche 1 bis 5 hergestelltes, getempertes Bergematerial, insbesondere ein bestimmter, passender Kornklassenbereich eines nach einem der Ansprüche 1 bis 5 hergestellten, getemperten Bergematerials, verwendet wird.

12. Verfahren zur Herstellung von Zement, Mörtel oder Beton, **dadurch gekennzeichnet,** daß als Zuschlagstoff ein nach einem der Ansprüche 1 bis 5 hergestellte, getempertes Bergematerial, insbesondere ein bestimmter, passender Kornklassenbereich eines nach einem der Ansprüche 1 bis 5 hergestellten, getemperten Bergematerials, verwendet wird.